# EUROPÄISCHE PATENTSCHRIFT

(11) **EP 2 007 046 B1**
(45) Veröffentlichungstag und Bekanntmachung des Hinweises auf die Patenterteilung: **24.04.2013**
(21) Anmeldenummer: 08009221.6
(22) Anmeldetag: 20.05.2008
(51) Int. Cl.: H04J 1/10

(54) **Verfahren und opto-elektrischer Wandler für Trägerfrequenz-Multiplexsysteme**
Method and opto-electric converter for carrier frequency multiplex systems
Procédé et convertisseur opto-électronique pour systèmes multiplexés à fréquences porteuses

(30) Priorität: 18.06.2007 DE 102007027883
(43) Veröffentlichungstag der Anmeldung: 24.12.2008
(73) Patentinhaber: BKtel communications GmbH, 41836 Hückelhoven-Baal (DE)
(72) Erfinder: Seidenberg, Jürgen, Dr., 52072 Aachen (DE)
(74) Vertreter: Vomberg, Friedhelm

(56) Entgegenhaltungen:
- US-A1- 2002 010 940

## Beschreibung

Die Erfindung betrifft ein Verfahren zur selektiven Aussonderung einzelner Signale aus einer Vielzahl von auf unterschiedlichen Trägerfrequenzsignalen modulierten Daten, die als Multiplexsignal weitergeleitet werden und von einem Empfänger demoduliert werden.

Die Erfindung betrifft ferner einen opto-elektrischen Wandler zur Durchführung des vorgenannten Verfahrens, der einen Eingangsport für ein lichtwellenleitendes oder elektrisches Kabel zur Eingabe von auf unterschiedlichen Trägerfrequenzsignalen modulierten Daten als Multiplexsignal aufweist und eine Einrichtung zur gezielten Aussonderung vorbestimmter Trägerfrequenzen und mehrere Ausgangsports für die Weiterleitung anwenderspezifisch unterschiedlicher Signale.

Das Multiplexverfahren dient zur zeitgleichen Übertragung von Signalen über ein einziges Medium, insbesondere einen Lichtwellenleiter oder ein elektrisches Kabel. Bei einer solchen leitungsgebundenen oder auch drahtlosen Übertragung können Signale aus mehreren Quellen gebündelt und gemeinsam übertragen werden, bevor sie für die jeweiligen Empfänger demoduliert werden. Bei dem hier in Rede stehenden Trägerfrequenz-Multiplexverfahren werden mehrere Signale auf je ein Trägerfrequenzsignal moduliert. Die jeweils entstehenden Frequenzbänder lassen sich zu einem breitbandigen Signal bündeln und übertragen. Nach dem Stand der Technik ist bekannt, dass beim Empfänger Filter eingesetzt werden, welche zur Auftrennung der eingehenden Signale dienen, die dann nach Demodulation in ihre ursprüngliche Frequenz zurückgewandelt werden. Verwendet man zur Selektion einzelner Trägerfrequenzsignale bzw. der anwenderspezifischen Signale Hochfrequenzfilter, durch die einzelne Frequenzbereiche geblockt werden, so werden in diesen betreffenden Frequenzbereichen Signale nur noch mit einem Restpegel erhalten, der eine zufrieden stellende Signalübertragung unmöglich macht. Der Nachteil eines solchen Verfahrens besteht allerdings darin, dass die Kosten für steilflankige Hochfrequenzfilter sehr hoch sein können, was einen kostengünstigen Geräteeinsatz verhindert. Zudem ist je nach Zahl der Anwender ein großer Platzbedarf in betreffenden Geräten entsprechend der zu verwendenden Anzahl der Filter notwendig.

Insbesondere die Glasfaserübertragungstechnik gewinnt im Teilnehmeranschlussbereich zunehmend an Bedeutung. Schnellere Internetzugänge erfordern höhere Datenraten, die bis in die Häuser der Internet-Nutzer geführt werden. Bei den heute weit verbreiteten DSL-Netzwerken werden die ursprünglich in zentralen Gebäuden vorgehalten DSLAMs (Digital Subscriber Line Access Multiplexer) weiter in die Nähe der Häuser gebracht, damit die nahezu unbegrenzte Datenübertragungskapazität der Glasfaserleitungen auf wenige Häuser aufgeteilt werden kann. Vielfach werden derzeit die Glasfaserzubringer bis auf ca. 4 km an die Häuser herangeführt und nach opto-elektrischer Wandlung über die sogenannte "letzte Meile" mittels Telefonkupferleitungen in die Haushalte verteilt. Neuere Bestrebungen gehen jedoch dahin, die Glasfasern unmittelbar bis in den Kundenhaushalt zu installieren (FTTH= Fiber To The Home). Bei solchen Lichtwellenleiterkabeln werden im Haus eine Fülle von Daten zur Verfügung gestellt, die wegen des hohen Gesamtpreises nicht von jedem Hausbewohner gewünscht werden. Bis zu einer Freischaltung nach Vertragsabschluss ist es sogar wünschenswert, dass die Hausbewohner nicht unberechtigter Weise über vorhandene oder geschaffene Ausgangsports des Gehäuses eine Datennutzung schaffen.

Ein Kommunikationssystem, wie es nach dem Stand der Technik bekannt ist, wird in US 2002/0010940 A1 offenbart.

Es ist Aufgabe der vorliegenden Erfindung, bei dem Verfahren und dem opto-elektrischen Wandler der eingangs genannten Art eine Verbesserung zu schaffen, durch die kostengünstigere Endgeräte mit geringerem Platzbedarf bereitgestellt werden können.

Diese Aufgabe wird durch das Verfahren nach Anspruch 1 sowie dem opto-elektrischen Wandler nach Anspruch 4 gelöst.

Der Kerngedanke der vorliegenden Erfindung besteht darin, dass anstelle mehrerer Frequenzbandfilter das eingehende Multiplexsignal mit jeweils anwenderspezifisch vorgebbaren Signalen überlagert wird, wodurch einzelne Trägerfrequenzsignale so verändert werden, dass deren Demodulation ausgeschlossen ist. Kundenspezifisch stehen somit an unterschiedlichen Ausgangsports aus dem veränderten Multiplexsignal nur solche demodulierbaren Signale zur Verfügung, welche für den Anwender "freigeschaltet" worden sind. Zur Durchführung des Verfahrens besitzt der opto-elektrische Wandler einen steuerbaren Oszillator zur Eingabe von auf unterschiedlichen Trägerfrequenzsignalen modulierten Daten als Multiplexsignal, wodurch die Demodulation des weitergeleiteten Trägerfrequenz-Multiplexsignals teilweise ausgeschlossen ist. Die Vorteile dieses Verfahrens bzw. der hierfür geeigneten Vorrichtung bestehen in der preiswerteren Lösung. Zudem lässt sich jeder Kanal des Trägerfrequenz-Multiplexsignals einzeln beeinflussen, wohingegen bei dem Verfahren mit den aus mehreren Hochfrequenzfiltern bestehenden Filterbänken aufgrund der endlichen Steilheit der Filter in der Regel deutlich mehr als ein Kanal des Trägerfrequenz-Multiplexsignals betroffen war.

Weiterbildungen der vorliegenden Erfindung sind in den Unteransprüchen beschrieben.

So kann vorzugsweise das Oszillatorsignal nur zeitweise, insbesondere in periodischen Zeitabständen zur Signalüberlagerung ausgesendet werden. Dieses Verfahren kann dazu benutzt werden, dass mittels eines einzigen Oszillators in kontinuierlicher Reihenfolge nacheinander unterschiedliche anwenderspezifische Signale zur Signalübertragung ausgesendet werden, so dass mit diesem Oszillator mehrere Träger des Trägerfrequenz-Multiplexsignals nacheinander überlagert werden, was dennoch zu einer permanenten Nichtnutzbarkeit der betroffenen Trägerfrequenzsignale und damit einer anwenderspezifischen Selektion der weitergeleiteten Signale führt. Auf diese Art und Weise lässt sich insbesondere in FTTH-optischen Empfängern die Möglichkeit schaffen, dass Netzbetreiber auf einfachste Art und Weise Programmpakete blockieren oder freischalten können, so dass der Kunde das Optimum an Service und Preis - je nach Bedarf - angeboten bekommt.

Vorzugsweise ist der Oszillator mit einer Steuereinheit zur Einstellung der Frequenz sowie der Signalamplitude verbunden, so dass in optimierter Weise die ausgesendete Frequenz und der Pegel des Oszillatorsignals in Bezug auf jedes Signal des Trägerfrequenz-Multiplexsignals eingestellt werden kann.

Weitere Ausgestaltungen der vorliegenden Erfindung sind den Zeichnungen in Verbindung mit den nachfolgenden Erläuterungen zu entnehmen. Es zeigen:
- Fig. 1: eine nach dem Stand der Technik verwendete Anordnung mit mehreren Filtern und
- Fig. 2: eine Prinzipskizze einer erfindungsgemäßen Anordnung.

Wie bereits vorstehend erwähnt, wird nach dem Stand der Technik zur gezielten Abschaltung von dezidierten Trägerfrequenzsignalen eines eingehenden Trägerfrequenz-Multiplexsignals 10 eine Anzahl von Filtern 11 bis 14 (für 4 unterschiedliche Anwender) verwendet, die mit einer Steuereinheit 15 verbunden sind. Am Ausgang 16 liegt je nach Schaltverbindung über eine der Filterstrecke das um die ausgefilterten Bestandteile minimierte Multiplexsignal an. Es ist offensichtlich, dass je nach Anzahl der Kunden bzw. Hausbewohner entsprechend viele Filter vorgesehen sein müssen, was zu einem hohen Platzbedarf führt. Zudem besteht wegen der endlichen Steilheit der Hochfrequenzfilter das Problem, dass in den Randbereichen auch benachbarte Kanäle des Trägerfrequenz-Multiplexsignals unerwünscht beeinflusst werden.

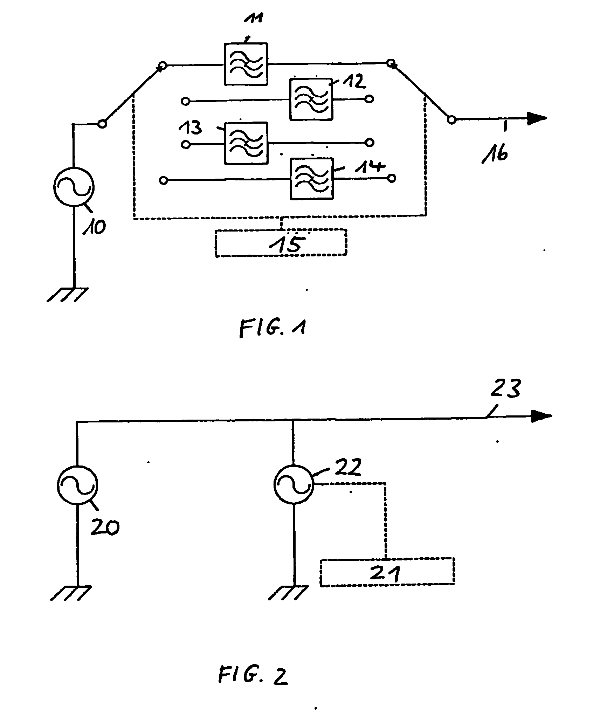

Zur Vermeidung dieser Nachteile wird eine Anordnung gemäß Fig. 2 vorgeschlagen, bei der das Trägerfrequenz-Multiplexsignal 20 mittels eines von einer Steuereinheit 21 gesteuerten Oszillators 22 derart veränderbar ist, dass durch die mittels des Oszillators 22 aufgegebenen Signale einzelne Trägerfrequenzsignale so verändert werden, dass deren Demodulation ausgeschlossen ist. Am Ausgang 23 liegt somit ein verändertes Multiplexsignal an, das nur teilweise demoduliert werden kann, wobei die Restsignale demodulierbar sind, welche anwenderspezifisch zuvor vorgegeben bzw. selektiert worden sind.

Der gesteuerte Oszillator 22 arbeitet insbesondere in einer vorgebbaren Taktfolge, in der sukzessive nacheinander unterschiedliche Signale auf das Trägerfrequenz-Multiplexsignal 20 aufgegeben werden, die jeweils in entsprechender Taktfolge unterschiedliche Ausgangssignale erzeugen.

## Patentansprüche

1. Verfahren zur selektiven Aussonderung einzelner Signale aus einer Vielzahl von auf unterschiedlichen Trägerfrequenzsignalen modulierten Daten, die als Multiplexsignal (20) weitergeleitet werden und von einem Empfänger demoduliert werden,
**dadurch gekennzeichnet, dass**
das Multiplexsignal (20) mit jeweils anwenderspezifisch vorgebbaren Signalen überlagert wird, wodurch einzelne Trägerfrequenzsignale so verändert werden, dass deren Demodulation ausgeschlossen ist.

2. Verfahren nach Anspruch 1, **dadurch gekennzeichnet, dass** die anwenderspezifisch vorgebbaren Signale, insbesondere bei der Weiterleitung von digital modulierten Signalen mit Frequenzbandbreite-komprimierten Signalen, nur zeitweise, vorzugsweise in periodischen Abständen, zur Signalübertragung ausgesendet werden.

3. Verfahren nach Anspruch 2, **dadurch gekennzeichnet, dass** mittels eines einzigen Oszillators (22) in kontinuierlicher Reihenfolge nacheinander unterschiedliche anwenderspezifische Signale zur Signalüberlagerung ausgesendet werden.

4. Opto-elektrischer Wandler zur Durchführung des Verfahrens nach einem der Ansprüche 1 bis 3, mit einem Eingangsport für ein lichtwellenleitendes oder elektrisches Kabel zur Eingabe von auf unterschiedlichen Trägerfrequenzsignalen modulierten Daten als Multiplexsignal (20) und einer Einrichtung zur gezielten Aussonderung vorbestimmter Trägerfrequenzsignalen und mit mehreren Ausgangsports für die Weiterleitung anwenderspezifisch unterschiedlicher Signale,
**dadurch gekennzeichnet, dass**
die Einrichtung aus einem steuerbaren Oszillator (22) zur Überlagerung einzelner Signale mit dem eingehenden Multiplexsignal (20) besteht, wodurch eine Demodulation des weitergeleiteten Multiplexsignals (20) teilweise ausgeschlossen ist.

5. Opto-elektrischer Wandler nach Anspruch 4, **dadurch gekennzeichnet, dass** ein einziger Oszillator (22) zur sukzessiven Aussendung unterschiedlicher Signale vorgesehen ist, die auf unterschiedliche Trägerfrequenzsignalen modulierte Daten zur späteren Demodulation unbrauchbar machen.

6. Opto-elektrischer Wandler nach Anspruch 4 oder 5, **gekennzeichnet durch** eine Steuereinheit (21) zur Einstellung der Frequenz sowie der Amplitude der Signale, wobei die Steuereinheit mit dem Oszillator verbunden ist.

## Claims

1. Method for selectively segregating individual signals from a multiplicity of data items which are modulated onto different carrier frequency signals, are forwarded as a multiplex signal (20) and are demodulated by a receiver,
**characterized in that**
signals which can each be predefined in a user-specific manner are superimposed on the multiplex signal (20), as a result of which individual carrier frequency signals are changed in such a manner that their demodulation is excluded.

2. Method according to claim 1, **characterized in that** the signals which can be predefined in a user-specific manner are emitted for signal transmission only occasionally, preferably at periodic intervals, in particular during the forwarding of digitally modulated signals with signals whose frequency bandwidth has been compressed.

3. Method according to claim 2, **characterized in that** different user-specific signals are emitted for signal superposing in continuous order in succession using a single oscillator (22).

4. Opto-electric converter for carrying out the method according to one of claims 1 to 3, having an input port for an optical waveguiding or electric cable for inputting data modulated onto different carrier frequency signals as a multiplex signal (20) and having a device for specifically segregating predetermined carrier frequency signals and having a plurality of output ports for forwarding user-specific different signals,
**characterized in that**
the device consists of a controllable oscillator (22) for superimposing the incoming multiplex signal (20) on individual signals, as a result of which demodulation of the forwarded multiplex signal (20) is partially excluded.

5. Opto-electric converter according to claim 4, **characterized in that** a single oscillator (22) is provided for the purpose of successively emitting different signals which render data modulated onto different carrier frequency signals unusable for subsequent demodulation.

6. Opto-electric converter according to claim 4 or 5, **characterized by** a control unit (21) for setting the frequency and the amplitude of the signals, the control unit being connected to the oscillator.

## Revendications

1. Procédé de séparation sélective de signaux individuels dans une pluralité de données qui sont modulées sur des signaux différents à fréquence porteuse et qui sont transmises en tant que signal multiplexé (20) et sont démodulées par un récepteur,
**caractérisé par le fait que**
des signaux qui peuvent être donnés chacun d'une manière spécifique à l'utilisateur sont superposés audit signal multiplexé (20), des signaux individuels à fréquence porteuse étant ainsi modifiés de manière à ce que la démodulation de ceux-ci soit exclue.

2. Procédé selon la revendication 1, **caractérisé par le fait que** lesdits signaux qui peuvent être donnés d'une manière spécifique à l'utilisateur, en particulier lors de la transmission de signaux modulés de façon numérique avec des signaux comprimés en largeur de bande de fréquences, ne sont émis que par instants, de préférence à intervalles périodiques, pour la transmission de signaux.

3. Procédé selon la revendication 2, **caractérisé par le fait que** différents signaux spécifiques à l'utilisateur sont émis successivement, par ordre continu, pour la superposition de signaux, au moyen d'un seul oscillateur (22).

4. Convertisseur opto-électrique pour la mise en oeuvre du procédé selon l'une quelconque des revendications 1 à 3, comprenant un port d'entrée pour un câble guide de lumière ou un câble électrique pour faire entrer des données, en tant que signal multiplexé (20), modulées sur des signaux différents à fréquence porteuse, et un dispositif pour la séparation visée de signaux prédéterminés à fréquence porteuse, ainsi qu'une pluralité de ports de sortie pour la transmission de signaux différents spécifiques à l'utilisateur,
**caractérisé par le fait que**
ledit dispositif se compose d'un oscillateur commandable (22) pour superposer ledit signal multiplexé entrant (20) à des signaux individuels, une démodulation du signal multiplexé (20) transmis étant ainsi exclue en partie.

5. Convertisseur opto-électrique selon la revendication 4, **caractérisé par le fait que** l'on prévoit un seul oscillateur (22) pour l'émission successive de signaux différents par lesquels des données modulées sur des signaux différents à fréquence porteuse sont rendues inutilisables pour la démodulation ultérieure.

6. Convertisseur opto-électrique selon la revendication 4 ou 5, **caractérisé par** une unité de commande (21) pour le réglage de la fréquence ainsi que de l'amplitude des signaux, ladite unité de commande étant reliée à l'oscillateur.
